# EUROPEAN PATENT APPLICATION

(11) **EP 3 579 173 A1**
(43) Date of publication of application: **11.12.2019**
(21) Application number: 18788641.1
(22) Date of filing: 28.03.2018
(51) Int. Cl.: G06Q 50/02, G06Q 10/08, G06Q 50/26

(54) **TRANSACTION SYSTEM AND TRANSACTION METHOD**

(30) Priority: 19.04.2017 JP 2017082855
(71) Applicant: Furusawa, Yosuke, Takizawa-shi, Iwate 020-0633 (JP)
(72) Inventor: Furusawa, Yosuke, Takizawa-shi, Iwate 020-0633 (JP)
(74) Representative: LKGLOBAL Lorenz & Kopf PartG mbB Patentanwälte
(86) International application number: PCT/JP2018/012875
(87) International publication number: WO 2018/193805

(57) **Abstract**

A trading system includes a monitoring device configured to monitor navigation trajectories of multiple vessels sailing on a sea, to generate monitoring information; and an offshore trading determination unit configured to, based on the navigation trajectories of the vessels included in the monitoring information received from the monitoring device, detect two or more vessels that have been in a state of being close to each other within a predetermined distance for a predetermined period of time or longer, so as to determine a likelihood that an offshore trade has been carried out between the two or more vessels.

## Description

### TECHNICAL FIELD

The present invention relates to a trading system and a trading method, for example, a trading system and a trading method of marine products.

### BACKGROUND ART

When trading products, it is very important to keep a proper balance between supply and demand while considering the timing (so-called "just-in-time"). In particular, in the field of trade of fresh products, such as fishery products and agricultural products, timely production (fishing and harvesting) of products to meet the demand on the market and rapid distribution of such products from producers to consumers, enable to provide the products in fresher states that meet needs of the consumers. This improves consumer satisfaction, stimulates the demand, and brings more profit to the producers.

In particular, in the fishing industry, as a general form of distribution, fishing vessels sail into a sea area where target fish live; fishermen operate in the area to catch fish, bring the fish back to a harbor to land the fish; then, the landed fish is traded on the market with the landed harbor identified as the place of production, to be finally delivered to consumers.

Here, for example, in order to provide fresher fish to consumers, a method has been proposed that facilitates trading by transmitting information on caught marine products from a vessel to a manager terminal (Patent Document 1).

However, in the case of targeting fish having a certain expected demand, simply operating in a sea area inhabited by the fish does not necessarily result in a catch of the fish by a necessary quantity in a suitable quality condition, which has been a persistent problem. In addition, in the case where sea areas suitable for catching the target fish are located away from each other, in order to catch the target fish to meet the demand, the sea areas may not be covered by a single navigation although it is desirable.

Thereupon, particularly in the case of offshore/pelagic fishery, there is a trading practice in which one fishing vessel operating in a certain sea area or in a more localized region buys, on the sea, fish caught in another sea area or region by another fishing vessel, and carries the fish together with fish caught by the one fishing vessel to land the fish (so-called "offshore trading").

Such offshore trading enables one fishing vessel or fleet to achieve the same result (catch of the fish) as that achieved by operation over a wider range than actually operated. In other words, a greater quantity or variety of fish can be obtained because the operations can cover a wider range in a shorter period of time than an operation performed by a single fishing vessel or fleet. Therefore, it brings an effect that enables to distribute better quality fish to the market more efficiently and more closely meeting the demand of the market or customers.

However, if one fishing vessel that has bought fish in an offshore trade lands fish caught by the one fishing vessel in a certain sea area without distinguishing the fish from the bought fish, namely, from the fish caught especially in another sea area by another fishing vessel, the original place of production of the fish becomes undistinguishable; namely, the traceability of the fish circulated on the market is impaired.

### RELATED ART DOCUMENTS

### [Patent Document]

Patent Document 1: Japanese Laid-open Patent Publication No. 2004-78571

### SUMMARY OF INVENTION

### [PROBLEM TO BE SOLVED BY THE INVENTION]

Thereupon, a problem to be solved by the present invention is to provide a trading system and a trading method that enable to grasp actual situations of offshore trading, or to provide a trading system and a trading method that enables to realize both advantages of securing the traceability of products and enjoying the convenience of offshore trading.

### [MEANS FOR SOLVING THE PROBLEM]

In order to solve the above problems, a trading system according to the present invention includes a monitoring device configured to monitor navigation trajectories of multiple vessels sailing on a sea, to generate monitoring information; and an offshore trading determination unit configured to, based on the navigation trajectories of the vessels included in the monitoring information received from the monitoring device, detect two or more vessels that have been in a state of being close to each other within a predetermined distance for a predetermined period of time or longer, so as to determine a likelihood that an offshore trade has been carried out between the two or more vessels.

Also, a trading method according to the present invention includes a step of monitoring navigation trajectories of multiple vessels sailing on a sea, to generate monitoring information; and a step of determining, based on the navigation trajectories of the vessels included in the monitoring information, by detecting two or more vessels that have been in a state of being close to each other within a predetermined distance for a predetermined period of time or longer, a likelihood that an offshore trade has been carried out between the two or more vessels.

According to the present invention, providing such a configuration enables, based on monitoring information obtained by monitoring navigation trajectories of multiple vessels, to detect two or more vessels that have been in a state of being close to each other within a predetermined distance for a predetermined period of time or longer, to assume that an offshore trade has been carried out between the two or more vessels, and to determine that there is a likelihood that an offshore trade has been carried out. Normally, multiple vessels sailing on the sea, especially multiple fishing vessels in operation, rarely remain in one place. Therefore, if a state of multiple vessels gathering around one place has continued for a predetermined period of time or longer, it is presumed that a certain trade, namely, an offshore trade, has been carried out between these vessels. Note that more precisely, there are situations where multiple fishing vessels form a fleet to catch fish, in the case of fishing with a round haul net. However, it is often the case that such a fleet departs from the same fishing port and returns to the same fishing port. By tracking the route from the port of departure, it would be possible to distinguish a fishing fleet from an offshore-trading fleet. Therefore, it is possible to detect an offshore trade without relying on self-reporting by producers operating respective vessels; and this enables to identify the exact place of production of products owned in the respective vessels. Conventionally, when an offshore trade is carried out, unless a producer who put the product on a distribution channel, for example, landed the product, made self-reporting, it is not possible to determine whether the product has been produced by the producer or another producer. Therefore, identifying the precise place of production of a product has had significant hindrance. According to the present invention, since it is possible to determine/detect a likelihood that an offshore trade has been carried out, it is possible to grasp an actual state of the offshore trade, and further, to facilitate offshore trading under managed conditions. It is also possible to solve the problem of impaired traceability of the product due to offshore trading.

Note that in the following, the present invention will be described by using an example specifically targeting marine products as the products, but the products are not limited to marine products. It is also not limited to legitimate products, and even unlawful products may be subject to the present invention.

Further, the trading system according to the present invention may further include a producer-side terminal configured to generate a list of owned products that includes product information on each product owned in each of the vessels.

Further, the producer-side terminal is provided on each of the vessels to be associated with each of the vessels.

Also, the trading method according to the present invention may further include a step of generating a list of owned products that includes product information on each product owned in each of the vessels.

According to such embodiments of the present invention, the products owned in the respective vessel can be precisely identified. Also, it is possible to grasp information on the products from product information on the products included in the list of owned products. Further, by receiving and collecting lists of owned products from the vessels, it is possible to centrally grasp and manage the amounts of products owned in the respective vessels. Therefore, it is possible to control the catch of fish in a given sea area. Note that product information on products included in a list of owned products may be referred to as "owned product information". The product information may include information on products, such as the kind, size, quality, capture position and time, and the like of each product.

Further, the trading system according to the present invention may have a configuration that further includes a catchables table that includes multiple positions or areas on the sea, each of which is associated with catchable products that are catchable in a corresponding position or region; and a verification unit configured to verify a place of production of an individual product included in the list of owned products received from the producer-side terminal. The verification unit verifies the place of production of the individual product by calculating a navigation trajectory of a vessel provided with the producer-side terminal that has transmitted a list of owned products to be verified, based on the monitoring information received from the monitoring device; extracting a catchable product corresponding to positional information included in the calculated navigation trajectory from the catchables table; and comparing the extracted catchable product with each of the products included in the list of owned products to be verified.

Also, the trading method according to the present invention may further include a step of providing a catchables table that includes multiple positions or areas on the sea, each of which is associated with catchable products that are catchable in a corresponding position or region; and a step of verifying the place of production of the individual product by calculating a navigation trajectory of a vessel associated with the list of owned products to be verified, based on the monitoring information, extracting a catchable product corresponding to positional information included in the calculated navigation trajectory from the catchables table, and comparing the extracted catchable product with each of the products included in the list of owned products to be verified.

According to such embodiments of the present invention, the place of production of an individual product can be more precisely verified than conventionally done; conventionally, it has been identified regardless of an actual place where the product was caught, but merely relying on the starting point on a distribution channel, for example, a landed port in the case of fish or shellfish being the product, or on self-reporting made by the producer. Therefore, the place of production of an individual product can be more specifically identified and higher traceability can be secured.

The trading system according to the present invention may be configured such that upon verifying a list of owned products from a producer-side terminal that is associated with one vessel from among the two or more vessels that have been determined to have carried out an offshore trade by the offshore trading determination unit, the verification unit verifies the place of production of the individual product by further calculating a navigation trajectory of another vessel from among the two or more vessels that has been determined to have carried out the offshore trade, based on the monitoring information received from the monitoring device; extracting a catchable product corresponding to positional information included in the calculated navigation trajectory of the other vessel from the catchables table; and comparing the extracted catchable product with each of the products included in the list of owned products to be verified.

Also, upon verifying the place of production of a product included in a list of owned products associated with one vessel from among the two or more vessels that have been determined to have carried out an offshore trade in the step of determining a likelihood that an offshore trade has been carried out, to verify the place of production of the individual product, the trading method according to the present invention may further execute calculating a navigation trajectory of another vessel from among the two or more vessels that has been determined to have carried out the offshore trade, based on the monitoring information; extracting a catchable product corresponding to positional information included in the calculated navigation trajectory of the other vessel from the catchables table; and comparing the extracted catchable product with each of the products included in the list of owned products to be verified.

Therefore, according to the present invention, providing such a configuration enables to prevent the place of production of an individual product from becoming unidentified even if the product has been obtained through an offshore trade. Also, even if a product has been obtained through an offshore trade, the original product information can be maintained such that the date and time when the product was actually caught is clear, and hence, the freshness of the product can be precisely estimated from the date and time.

The trading system according to the present invention may be configured to further include a user-side terminal to generate order information representing a product ordered by a user. The trading system provides the user terminal with a product information item from among the product information that has been verified by the verification unit, and matches the order information from the user terminal.

Also, the trading method according to the present invention may further include a step of generating order information representing a product ordered by a user; and a step of providing a user terminal with a product information item from among the product information that has been verified, and matches the order information.

Therefore, the user can obtain more precise and specific information on the place of production of products that the user intends to buy.

### BRIEF DESCRIPTION OF DRAWINGS

FIG. 1 is a schematic diagram illustrating an embodiment of a trading system according to the present invention;
FIG. 2 is a block diagram illustrating an example of a hardware configuration of a monitoring device;
FIG. 3 is a block diagram illustrating an example of a hardware configuration of each of a producer-side terminal, a user terminal, and a server;
FIG. 4 is a diagram illustrating a catchables table;
FIG. 5 is a flow chart illustrating a process performed on a monitoring device;
FIG. 6 is a flow chart illustrating a process performed on a server;
FIG. 7 is a flow chart illustrating a process performed on a user-side terminal; and
FIG. 8 is a flow chart illustrating another process performed on a server.

### EMBODIMENTS FOR CARRYING OUT THE INVENTION

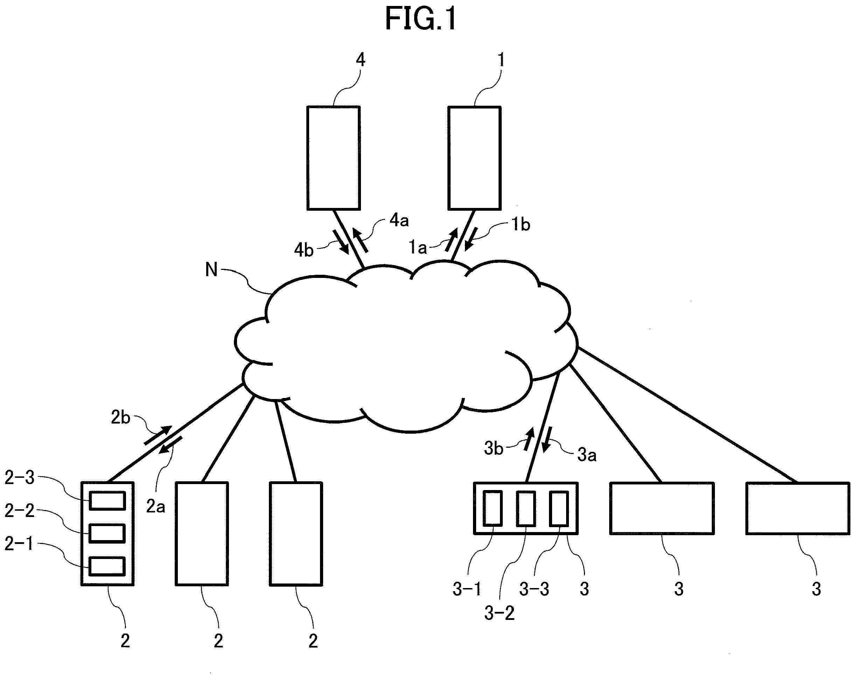

An overview of an embodiment of a trading system according to the present invention is illustrated in FIG. 1. The trading system includes a monitoring device 1, producer-side terminals 2, and a server 4, which are connected via a network N.

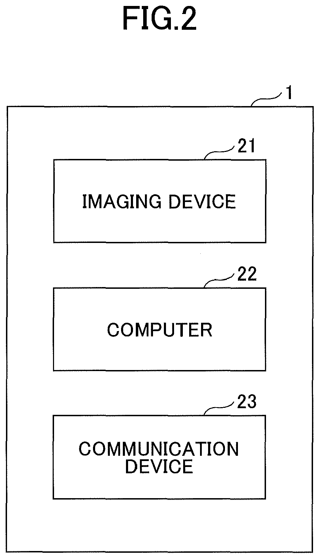

FIG. 2 is a block diagram illustrating an example of a hardware configuration of the monitoring device 1. As illustrated in FIG. 2, the monitoring device 1 includes an imaging device 21, a computer 22, and a communication device 23. The imaging device 21 is, for example, a camera. The computer 22 includes, for example, a CPU (Central Processing Unit), a RAM (Random Access Memory), and a ROM (Read-Only Memory). The communication device 23 includes, for example, an antenna.

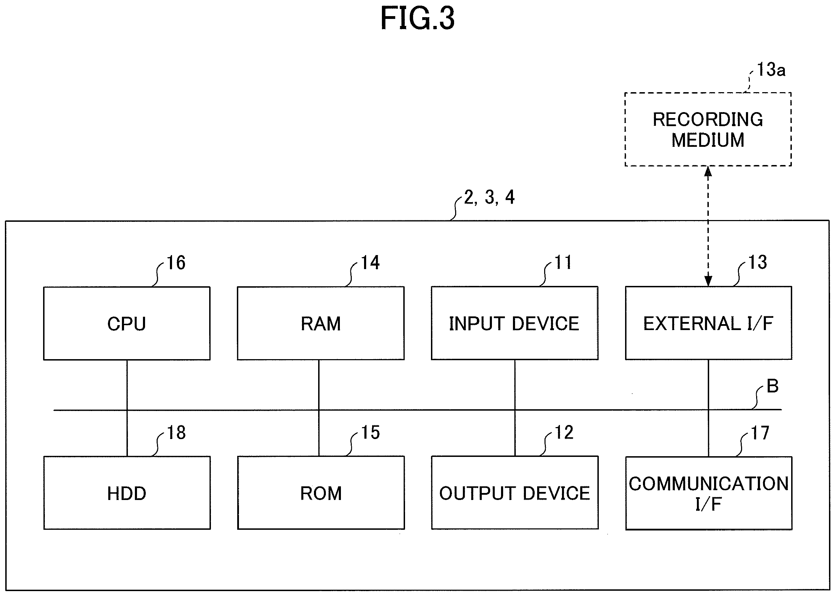

FIG. 3 is a block diagram illustrating an example of a hardware configuration of each of the producer-side terminal 2, a user-side terminal 3, and the server 4. Note that the example described here assumes that each of the producer-side terminal 2, the user-side terminal 3, and the server 4 has substantially the same hardware configuration, although the hardware configurations of the producer-side terminal 2, the user-side terminal 3, and the server 4 may be different from each other.

As illustrated in FIG. 3, each of the producer-side terminal 2, the user-side terminal 3, and the server 4 has an input device 11, an output device 12, an external I/F 13, and a RAM (Random Access Memory) 14. Each of the producer-side terminal 2, the user-side terminal 3, and the server 4 also has a ROM (Read-Only Memory) 15, a CPU (Central Processing Unit) 16, a communication I/F 17, and an HDD (Hard Disk Drive) 18. These hardware components are connected with each other by a bus B.

The input device 11 includes a button, a switch, a keyboard, a mouse, a touch panel, and the like, and is used for inputting various signals into each of the producer-side terminal 2, the user-side terminal 3, and the server 4. The output device 12 includes a display device, such as a display, and an audio output device, such as a speaker, to display various processed results.

Note that each of the producer-side terminal 2, the user-side terminal 3, and the server 4 may use at least one of the input device 11 and the output device 12 connected to the bus B when necessary.

The external I/F 13 is an interface with an external device. The external device may be a recording media 13a such as, for example, a CD (Compact Disk), DVD (Digital Versatile Disk), SD memory card (SD memory card), or USB memory (Universal Serial Bus memory).

Each of the producer-side terminal 2, the user-side terminal 3, and the server 4 can perform a read or write operation on the recording medium 13a through the external I/F 13.

The RAM 14 is a volatile semiconductor memory (storage device) that temporarily stores a program and data. The ROM 15 is a non-volatile semiconductor memory (storage device) that can hold a program or data even when the power is turned off. The CPU 16 is a processor that reads programs and data from, for example, the HDD 18 or the ROM 15 onto the RAM 14, to execute various processes.

The communication I/F 17 is an interface for connecting each of the producer-side terminal 2, the user-side terminal 3, and the server 4 to the network N. The HDD 18 is a non-volatile memory (storage device) that stores programs and data.

The programs and data stored in the HDD 18 include a program that implements the present embodiment, an OS (operating system) as basic software for controlling the entirety of each of the producer-side terminal 2, the user-side terminal 3, and the server 4, and various application programs running on the OS.

Note that each of the producer-side terminal 2, the user-side terminal 3, and the server 4 may use a non-volatile memory (storage device) such as an SSD (Solid State Drive) instead of or in combination with the HDD 18.

The monitoring device 1, the producer-side terminal 2, the user-side terminal 3, and the server 4 according to the present embodiment can implement various functions and various processes, which will be described later, by the hardware configurations illustrated in FIGs. 2 and 3.

### <Monitoring device 1>

The monitoring device 1 is configured to monitor navigation trajectories of multiple vessels sailing on the sea, to generate monitoring information. In the present embodiment, the monitoring device 1 may include a monitoring unit, an analysis unit, and a communication unit.

The monitoring unit is, for example, a camera mounted on an artificial satellite, which periodically monitors a predetermined area on the sea (captures an image in the case of a camera), to generate monitoring data to identify the position of multiple vessels in the area. Monitoring data generated by the monitoring unit is transmitted to the analysis unit. The analysis unit is, for example, a computer to analyze monitoring data received from the monitoring unit. For example, the analysis unit analyzes multiple images taken by the camera along a time series, identifies multiple vessels in the images, and grasps the positional information of each vessel in a time series. In other words, for each vessel, the analysis unit records the positional information in association with the time to obtain the navigation trajectory of each vessel that has been sailing, and to generate monitoring information on the vessel. The communication unit transmits the monitoring information obtained for the vessels to the server connected via wireless and/or wired communication facilities (arrow 1b). Also, the communication unit can receive various signals from the producer-side terminals 2, the server 4, and the like via the network N (arrow 1a).

FIG. 1 illustrates an example in which the monitoring unit, analysis unit, and communication unit are integrally configured and provided in a device such as an artificial satellite. However, these monitoring unit, analysis unit, and communication unit may be configured separately. In other words, only the monitoring unit may be provided in a satellite, and the analysis unit and the communication unit may be provided in another device connected via the network, such as the server 4. Also, functions of the monitoring unit, analysis unit, and/or communication unit may be partially provided in separate devices. For example, a part of the analysis unit may be integrally configured with the monitoring unit, and the other part of the analysis unit may be integrally configured with the communication unit. Note that each vessel is required to be equipped with an automatic identification system.

Also, multiple monitoring units may be provided to monitor areas on the sea that at least partially overlap each other, so as to improve the precision of the positional information of each vessel by combining the positional information from the monitoring units to perform analysis. Also, monitoring may be performed by the monitoring unit that is moving relative to an object to be monitored. In addition to the camera mounted on a satellite as described above, the monitoring unit may include a global positioning system (GPS) device, a ground-based radar device, a wireless communication device such as a mobile phone, and the like.

The positional information representing a navigation trajectory included in the monitoring information may include values represented by absolute indices such as longitude and latitude. It may also include values represented by relative distances and orientations from a predetermined position on the ground or on the sea.

Also, identification information of a GPS device corresponding to each vessel can be used as the identification information of the vessel. Additionally or alternatively, the analysis unit may assign individual identification information to each navigation trajectory. The identification information may further include information on the type and size of the vessel, the type of facility (fishing gear) installed on the vessel, the nationality of the vessel, and the like, or may be associated with these information items.

The communication unit transmits the navigation trajectory of each vessel obtained by the analysis unit to the server, in a state of being associated with the identification information of the corresponding vessel. This transmission to the server may be performed on a regular basis for monitoring information for a predetermined period of time with respect to all or part of vessels; alternatively, the transmission may be performed in response to a request for transmission from the server, for a period of time and/or for a particular vessel according to the request for transmission.

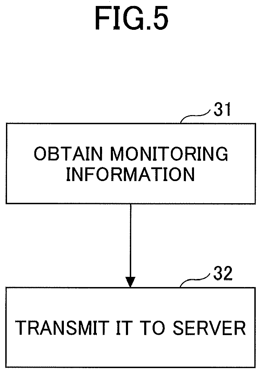

In this way, the monitoring device 1 can obtain monitoring information on the navigation trajectory of each of the multiple vessels sailing over the sea in association with the identification information (Step 31 in FIG. 5), and can transmit this monitoring information to the server 4 (Step 32 in FIG. 5).

### <Producer-side terminal 2>

The producer-side terminal 2 is configured to generate a list of owned products that includes product information of each product owned in each vessel. FIG. 1 illustrates an example in which producer-side terminals 2 are installed on the respective vessels sailing over the sea. Each of the producer-side terminals 2 includes an input unit 2-1, a display unit 2-2, and a communication unit 2-3.

The input unit 2-1 may include, for example, a keyboard or touch panel, and/or may include, for example, a microphone that enables input by voice recognition. An operator as the producer (fisher) on a vessel equipped with a producer-side terminal 2 may input a capture position of a product which he or she has captured and currently owns. Further, the kind, size, weight, quality, and the like of an individual product may be input by grades, or a photograph of the product may be taken and input. It is also possible to input information on sales such as a desired selling price of a product.

Products may mainly include marine products, more specifically, fishes; crustaceans such as crabs and shrimps; cetaceans such as whales and dolphins; marine mammals including sea animals such as sea lions and fur seals; shellfishes; kelp; seaweed; and the like.

The input unit 2-1 may additionally or alternatively be configured to automatically recognize and input the capture position, kind, size, quality, quantity, and the like of products when they are caught, when they are carried into the vessel, and/or when they are stored in a depot of the vessel.

For example, the input unit 2-1 includes a position recognition device based on GPS or the like, to automatically recognize the current position when catching fish, so as to associate the caught products with identification information for individually identifying the products caught at the position. When the caught fish are carried into a depot (freezer) one by one, an imaging device such as a camera placed above a conveyor such as a belt conveyor, may capture images of individual products being carried by the conveyor. By analyzing the images, it is possible to determine the kind of fish, measure the size, and determine the state/quality of the fish from the color, luster, and the like. Also, a weight measuring device may be installed in the conveyor to measure the weight of products. Additional individual product information obtained in this way is further associated with the identification information representing an individual product, and is stored in a form of a list of owned products along with the positional information, for example, in a memory provided in the producer-side terminal 2.

The producer-side terminal 2 may further include a labeling device to assign identification information to a product. This labeling is carried out by directly writing on a product by printing, engraving, or the like; or attaching or embedding a labeling seal on which the identification information is displayed as, for example, a bar code or a two-dimensional bar code, or an RF-ID tag in which the identification information is embedded by an electromagnetic method. Also, as for smaller fish, which are less likely to be handled individually and are transported in containers or the like, the containers may be labeled in advance, and when the fish are placed in a container, an overall state of the fish may be ranked automatically or manually; then, this information may be stored in association with the identification information of the label of the container, together with the positional information representing the position at which the fish were caught.

Also, when inputting owned product information through the input unit 2-1, it may be configured such that the positional information and the time cannot be input manually; in this case, values obtained by the clock and the position recognition device provided in advance in the producer-side terminal 2 can be used as the positional information and the time of the producer-side terminal 2. Alternatively, only one of the positional information and the time may be allowed to be input and the other may be automatically obtained based on the navigation trajectory of a vessel. Configured as such, it is possible to prevent an input error by an operator and to block a deceptive input.

Also, in the case where the producer buys products from another vessel on the sea, when receiving delivery of the products, the producer may obtain data of owned product information associated with the products in a set. As this time, it is desirable to further obtain the identification information on a vessel that originally caught the products. Having received the delivery of the products, the producer may store the products in his/her depot and may store the data of owned product information related to the products in the list of owned products on his/her producer-side terminal 2. In this way, also for products obtained through offshore trading, it is possible to precisely record their places of production, and to distribute the products in a state of being associated with the places of production. Also, among products that have been obtained through offshore trading in this way, only those traded with the original owned product information may be given specific certification so as to be delivered to consumers as products having secured traceability.

The list of owned products generated in this way and/or information input through the input unit 2-1 in this way may be temporarily or permanently recorded in a memory provided in the producer-side terminal 2 before being transmitted to the server 4, or may be transmitted in response to each input operation, directly to the server 4 via the network so as to be recorded on the server 4.

The display unit 2-2 is a display device to display various information items for a producer, for example, a liquid crystal display, an organic EL display, or a cathode ray tube, which displays information for assisting the producer to input data through the input unit 2-1 and information indicating a state of orders from users.

When inputting owned product information, the display unit 2-2 can display items of information to be input, display the current positional information and time, and display ordered product information from users, to present to the producer those products in high demand. The display unit 2-2 may also display the positions of other vessels or the list of owned products of the other vessels. These displays may be indicated in numerical values using latitude and longitude, or may be displayed as positions on a map.

The communication unit 2-3 is a communication device having a function of transmitting to the server 4 data of owned product information input through the input unit 2-1 (arrow 2b). The communication unit 2-3 can also receive data transmitted from the server 4 (arrow 2a). The communication unit 2-3 has an antenna, and includes, for example, a mobile phone, a satellite communication device, a wireless communication device, and the like. The communication unit 2-3 can transmit information data input through the input unit 2-1 or information data obtained through other attached devices on a regular basis or in response to a call from the server 4.

Further, the producer-side terminal 2 stores an individual identification information ID for the producer-side terminal 2 itself and/or for the vessel to which the producer-side terminal 2 belongs; when transmitting the owned product information, the owned product information is transmitted in association with this identification information ID.

In this way, for each of the multiple products that were caught by the vessel, to which the producer-side terminal 2 belongs, and have been stored or owned in the vessel, the producer-side terminal 2 transmits product information including positional information representing the place of production (produced area, i.e., captured area) to the server 4 as the owned product information, which may be in some cases associated with other information items related to the product.

### <Server 4>

The server 4 is connected to the network N and is configured to communicate with the monitoring device 1, the producer-side terminal 2, and the user-side terminal 3, to receive monitoring information from the monitoring device 1 through the network N, and to receive owned product information from the producer-side terminal 2.

In an embodiment of the present invention, the server 4 includes an offshore trading determination unit. Based on navigation trajectories of multiple vessels included in the monitoring information received from the monitoring device 1, the offshore trading determination unit detects vessels that have been in a state of being close to each other within a predetermined distance over a predetermined period of time, so as to determine a likelihood that an offshore trade has been carried out. In other words, the offshore trading determination unit compares the navigation trajectories of the vessels with each other; and if detecting that the positional information of at least two vessels indicates simultaneous presence of the vessels within a predetermined distance over a predetermined period of time, determines that there is a likelihood that an offshore trade has been carried out between these vessels; then, sets a set of offshore-tradability flags for items of the owned product information received from the producer-side terminals 2 belonging to the respective vessels.

The server 4 further includes a verification unit. The verification unit verifies the place of production of each individual product included in the list of owned products received from the producer-side terminal. At this time, based on the monitoring information received from the monitoring device, the verification unit obtains the navigation trajectory of the vessel equipped with the producer-side terminal that has transmitted the list of owned products to be verified; extracts catchable products corresponding to the positional information included in the obtained navigation trajectory from a catchables table, which will be described later; and compares the catchable products with the products included in the list of owned products to be verified, to verify the place of production of each individual product.

For example, the verification unit verifies whether the owned product information of the producer-side terminal 2, in which the above-described offshore-tradability flags have been set, is valid in terms of the places of production of the products included therein (positional information indicating the produced area or captured area) based on the navigation trajectory of the vessel to which the producer-side terminal 2 having the owned product information belongs.

Based on the verification by the verification unit, for a product whose place of production has been confirmed, namely, a product whose place of production based on the list of owned products matches a catchable position based on the catchables table; or for a product whose kind based on the list of owned products and the capture position match a catchable product extracted from the catchables table based on the position, the owned product information is stored as a providable product. The server 4 may have a list of providable products. Meanwhile, a product whose place of production could not be confirmed may be stored as a non-providable product, or may be included in the list of providable products with attaching a note to the owned product information item that the place of production of the product is not confirmed.

Note that as described above, in the monitoring information from the monitoring device 1, each navigation trajectory of each of multiple vessels included therein is associated with a unique identification information ID for identifying the corresponding vessel or producer-side terminal 2 associated with the vessel; and a main product list/owned product information from the producer-side terminal 2 is associated with an identification information ID representing the producer-side terminal 2 as the sender of the main product list/owned product information. By uniquely associating the identification information ID from the monitoring device 1 with the identification information ID from the producer-side terminal 2, it is possible to associate the producer-side terminal 2 as the sender of the list of owned products/owned product information with a vessel based on the monitoring information.

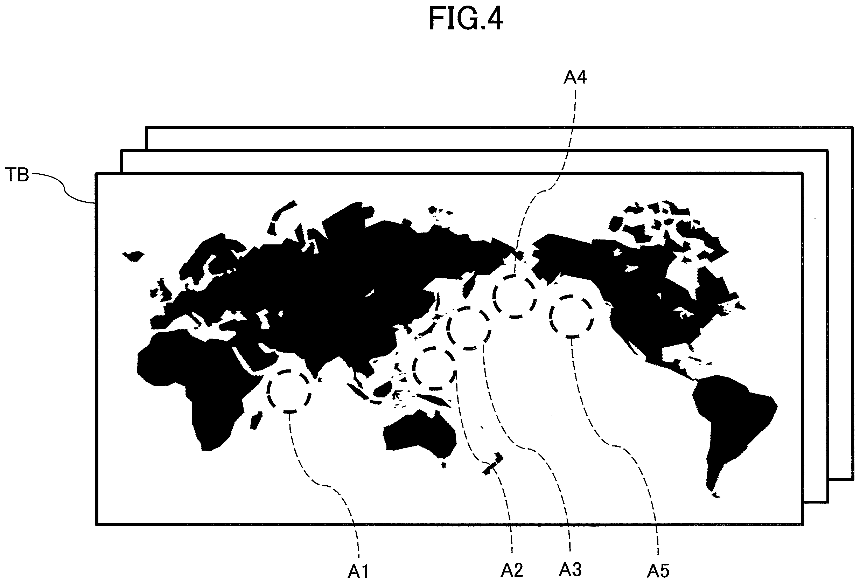

The catchables table TB is used for verification by the verification unit. FIG. 4 is a conceptual diagram illustrating this catchables table. The catchables table TB is a table that records multiple positions or areas such as A1 to A5 on the sea, each of which is associated with a list of products that are catchable at the position (presented in a form of a map in FIG. 4). Further, for each of the positions or areas A1 to A5, lists of catchable products may be provided, which may vary depending on the season. Note that the catchables table TB may be stored in a memory in the server 4 or may be stored in any device connected via the network N. Alternatively, the table may be separately stored in various devices connected via network N. Further, the catchables table TB may be configured to be rewritable/updatable only by a person having specific permission (e.g., upon input from a producer-side terminal 2 with specific permission), or may be configured to be rewritable/updatable upon information input from a large number of persons (e.g., producer-side terminals 2).

The verification unit of the server 4 extracts, from the catchables table TB, catchable products corresponding to positional information included in a navigation trajectory of a vessel provided with the producer-side terminal 2 related to owned product information to be verified, to compare the catchable products with the owned product information. If there is a product from among the owned products that is not included in the catchable products, the product is set with a production-place-confirmation flag (this product is referred to as a "production-place-confirmation product").

The verification unit further extracts, from the catchables table T, catchable products corresponding to positional information included in a navigation trajectory of another vessel (to which different owned product information belongs) (i.e., a vessel that is likely to be the counterparty of an offshore trade) for which the same set of offshore-tradability flags have been set as the owned product information (of the vessel) that includes the production-place-confirmation product; then, confirms whether the extracted products include a product corresponding to the product to which the production-place-confirmation flag has been set. If the production-place-confirmation product under verification is included in the catchable products related to the other vessel, the verification unit records the positional information on a catchable product corresponding to the production-place-confirmation product as a candidate place of production of the production-place-confirmation product.

In another embodiment of the present invention, the verification unit may verify the validity of the place of production of a product included in the owned product information, regardless of setting or non-setting of an offshore-tradability flag by the offshore trading determination unit. In other words, for each product included in the owned product information received from the producer-side terminal 2, a position where the product can be caught is obtained from the catchables table TB; then, the place of production of the product based on the owned product information received from the producer-side terminal 2 is compared with the position where the product can be caught as obtained from the catchables table TB, to verify the validity of the place of production for each product included in the owned product information.

At this time, if the place of production of the product based on the owned product information received from the producer-side terminal 2 is not included as a catchable position obtained from the catchables table TB, a production-place-confirmation flag is set for the product. Then, with respect to the producer-side terminal 2 as the sender of the owned product information including the production-place-confirmation product, the likelihood of offshore trading is determined by the offshore trading determination device as in the embodiment described above. A set of offshore-tradability flags are set for the producer-side terminal 2 (of the vessel) and for another producer-side terminal 2 belonging to another vessel which has been determined to have done an offshore trade with the vessel presumably. Further, as in the embodiment described above, for the navigation trajectory of the other producer-side terminal 2 as the presumable offshore trading counterparty, the verification unit extracts catchable products from the catchables table TB, to confirm whether the extracted products include a product corresponding to a production-place-confirmation product; if a production-place-confirmation product is included as a catchable product related to the other vessel, the verification unit records the positional information of a catchable product corresponding to the production-place-confirmation product as a candidate place of production of the production-place-confirmation product.

Further, the server 4 transmits a production-place-confirmation message to confirm the place of production with respect to the production-place-confirmation product to the original producer-side terminal 2 (i.e., the producer-side terminal 2 as the sender of the owned product information including the production-place-confirmation product). At this time, the production-place-confirmation message may include a candidate place recorded for the production-place-confirmation product, and the place of production may be confirmed in a form of confirming whether this candidate place is correct, or may be confirmed in a form of allowing to freely input the place of production at the producer-side terminal 2 that has received the production-place-confirmation message. The production-place-confirmation message may include a message prompting the receiver to input whether an offshore trade was done, and to input the counterparty.

With reference to an answer from the producer-side terminal 2 in response to the production-place-confirmation message, the verification unit verifies the validity of the place of production designated by the producer-side terminal 2, and if it is determined to be valid, the server 4 may change the place of production of the production-place-confirmation product based on the newly designated place of production, to update the owned product information.

In the case of receiving no response to the production-place-confirmation message, or in the case of receiving a response that includes a negative determination on the validity of place of production of the production-place-confirmation product, the owned product information may be updated on the server 4 such that the place of production of the production-place-confirmation product is "not confirmed".

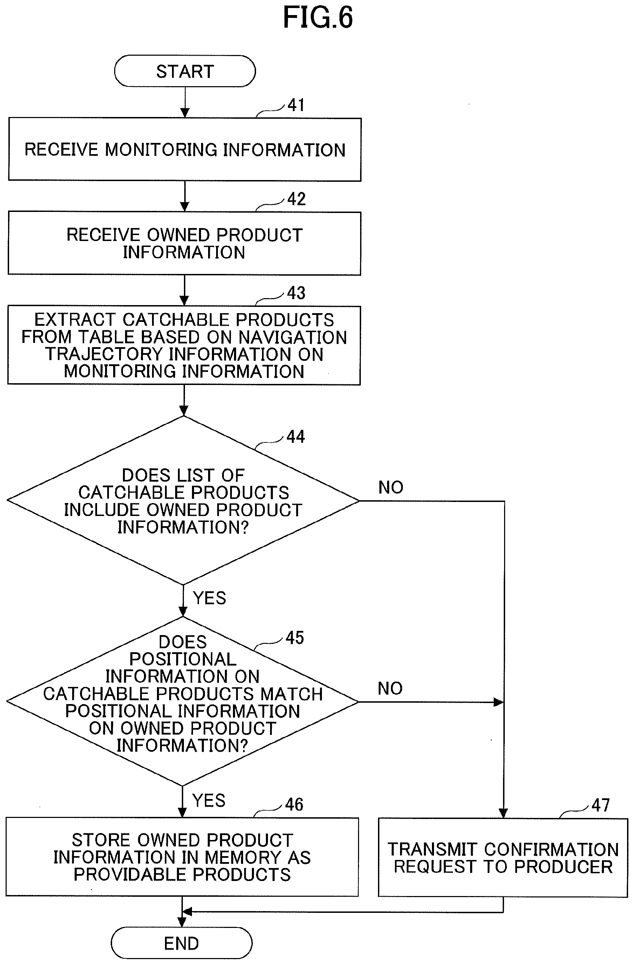

Further, another embodiment will be described with reference to a flow chart in FIG. 6. The server 4 receives monitoring information from the monitoring device 1 (Step 41) and receives owned product information from a producer-side terminal 2 (Step 42). For each producer-side terminal 2 (of the vessel) as the sender of the owned product information, among the received monitoring information, the server 4 identifies a corresponding vessel (including the producer-side terminal 2); extracts catchable products corresponding to the positional information included in the navigation trajectory corresponding to the identified vessel (including the producer-side terminal 2) from the catchables table TB (Step 43); and generates a list of catchable products that have been extracted. The server 4 determines whether the list of catchable products includes products of the owned product information (Step 44). In the case of YES, the server 4 determines whether the positional information corresponding to the product matches the positional information of a catchable product corresponding to the product (Step 45). In the case of YES, the server 4 stores the owned product information in the memory of the server 4 as a providable product (Step 46). In the case where the list of catchable products does not include products of the owned product information (in the case of NO at Step 44); and in the case where the positional information corresponding to the product does not match the positional information of a catchable product corresponding to the product (in the case of NO at Step 45), the server 4 transmits a production-place-confirmation message that requests the producer-side terminal 2 as the sender of the owned product information, to perform confirmation (Step 47) .

### <User-side terminal 3>

The trading system 100 may further include a user side terminal 3 connected via the network N.

The user-side terminal 3 is provided by the side of a user as a consumer who intends to buy a product, and includes an input unit 3-1, a display unit 3-2, and a communication unit 3-3.

The input units 3-1 may include, for example, a keyboard or touch panel, and/or may include, for example, a microphone that enables input by voice recognition. The user operating the user-side terminal 3 can input conditions such as the kind and quantity of a desired product through the input unit 3-1.

The display unit 3-2 is a display device to display various information items for a user, for example, a liquid crystal display, an organic EL display, or a cathode ray tube, and displays information for assisting the user to input data through the input unit 3-1 and information indicating a state of owned products of producers.

The display unit 2-2 may display items of information to be input when the user inputs an order, or may display the quantity, quality, price, and the like of each of the products currently owned by the respective producers.

The communication unit 3-3 is a wireless or wired communication device that transmits order product information with respect to products that the user wants to buy, which has been input through the input unit 3-1, to the server 4 (arrow 3b). Further, the communication unit 3-3 can receive data transmitted from the server 4 (arrow 3a). The communication unit 3-3 may be connected to the server 4 by wire or wirelessly via a network. The communication unit 3-3 can transmit data input through the input unit 3-1 to the server 4 upon each input operation. Also, the communication unit 3-3 may access the server 4 on a regular basis to receive newly arrived data.

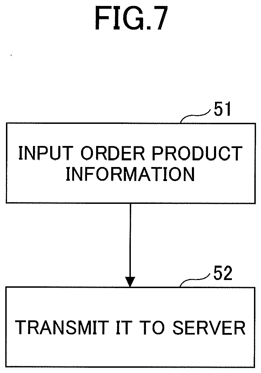

When order product information is input through the input unit 3-1 of the user-side terminal 3 (Step 51 in FIG. 7), this order product information is transmitted to the server 4 through the communication unit 3-3 (Step 52 in FIG. 7). This order product information may include information on various features of a product to be ordered by the user such as the kind, size, quantity, quality, and a desired purchase price.

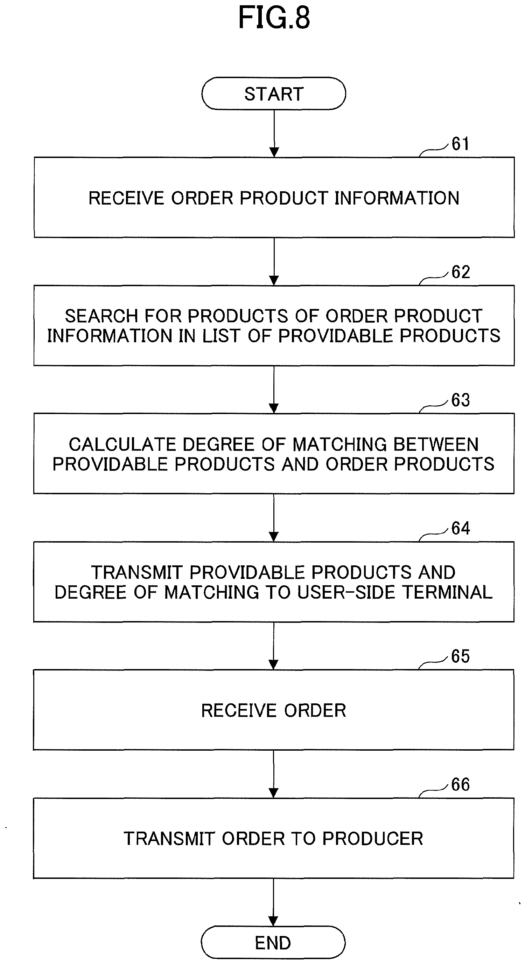

In response to receiving this order product information (Step 61 in FIG. 8), the server 4 extracts products included in the order product information from the list of providable products (Step 62 in FIG. 8). The server 4 compares these extracted providable products with the features of the products included in the order product information, to calculate a degree of matching (Step 63 in FIG. 8). Then, the server 4 associates the extracted providable products with the calculated degree of matching, and transmits the associated data to the user-side terminal 3 as the sender of the order product information (Step 64 in FIG. 8).

In response to receiving this, the user-side terminal 3 displays the contents on the display unit 3-2, with which the user considers an order content and determines products to buy among the presented providable products, namely, specific products to buy from specific producers. Once the order content has been input through the input unit 3-1, the user-side terminal 3 transmits the determined order information to the server 4 via the communication unit 3-3. In response to receiving the determined order information (Step 65 in FIG. 8), the server 4 transmits the determined order information to the producer-side terminal 2 as the order destination specified in the determined order information (Step 66 in FIG. 8).

When the producer-side terminal 2 receives this determined order information, the producer having this producer-side terminal 2 prepares to ship the products specified in the determined order information to the user or to a distribution center. The products ready for shipment may be delivered from the producer's vessel directly to the user who made the order; alternatively, for example, a distribution center in a port most suitable with respect to the user's location may be selected so as to deliver the products to the user via the distribution center.

The user who receives the products can confirm whether the products have been delivered as ordered from the identification information labeled on the products.

According to the trading system 100 and the trading method as described above, it is possible to verify the true place of production for each individual product owned by each producer with validity, and to identify the place of production for each product. Therefore, the user can order individual products each of which is associated with a verified place of production.

It is needless to say that some of the embodiments described above are not intended to limit the present invention and are merely illustrative examples for describing the embodiments. Also, the multiple embodiments described above may be partially selected to be combined appropriately.

The present application is based on Japanese Patent Application No. 2017-082855, filed on April 19, 2017, the entire contents of which are hereby incorporated by reference.

## Claims

1. A trading system comprising:
a monitoring device configured to monitor navigation trajectories of a plurality of vessels sailing on a sea, to generate monitoring information; and
an offshore trading determination unit configured to, based on the navigation trajectories of the plurality of vessels included in the monitoring information received from the monitoring device, detect two or more vessels that have been in a state of being close to each other within a predetermined distance for a predetermined period of time or longer, so as to determine a likelihood that an offshore trade has been carried out between the two or more vessels.

2. The trading system as claimed in claim 1, further comprising:
a producer-side terminal configured to generate a list of owned products, the list including product information on each product owned in each of the plurality of vessels.

3. The trading system as claimed in claim 2, wherein the producer-side terminal is provided on said each of the plurality of vessels to be associated with said each of the plurality of vessels.

4. The trading system as claimed in claim 3, further comprising:
a catchables table that includes a plurality of positions or areas on the sea, each of which is associated with catchable products that are catchable in a corresponding position or region; and
a verification unit configured to verify a place of production of an individual product included in the list of owned products received from the producer-side terminal,
wherein the verification unit verifies the place of production of the individual product by calculating a navigation trajectory of a vessel provided with the producer-side terminal that has transmitted a list of owned products to be verified, based on the monitoring information received from the monitoring device,
extracting a catchable product corresponding to positional information included in the calculated navigation trajectory from the catchables table, and
comparing the extracted catchable product with each of the products included in the list of owned products to be verified.

5. The trading system as claimed in claim 4, wherein upon verifying a list of owned products from a producer-side terminal that is associated with one vessel from among the two or more vessels that have been determined to have carried out an offshore trade by the offshore trading determination unit, the verification unit verifies the place of production of the individual product by
further calculating a navigation trajectory of another vessel from among the two or more vessels that has been determined to have carried out the offshore trade, based on the monitoring information received from the monitoring device,
extracting a catchable product corresponding to positional information included in the calculated navigation trajectory of said another vessel from the catchables table, and
comparing the extracted catchable product with each of the products included in the list of owned products to be verified.

6. The trading system as claimed in claim 4 or 5, the trading system further comprising:
a user-side terminal configured to generate order information representing a product ordered by a user,
wherein the trading system is configured to provide the user terminal with a product information item from among the product information that has been verified by the verification unit, and matches the order information from the user terminal.

7. A trading method comprising:
a step of monitoring navigation trajectories of a plurality of vessels sailing on a sea, to generate monitoring information; and
a step of determining, based on the navigation trajectories of the plurality of vessels included in the monitoring information, by detecting two or more vessels that have been in a state of being close to each other within a predetermined distance for a predetermined period of time or longer, a likelihood that an offshore trade has been carried out between the two or more vessels.

8. The trading method as claimed in claim 7, further comprising:
a step of generating a list of owned products, the list including product information on each product owned in each of the plurality of vessels.

9. The trading method as claimed in claim 8, further comprising:
a step of providing a catchables table in which a plurality of positions or areas on the sea, each of which is associated with catchable products that are catchable in a corresponding position or region; and
a step of verifying the place of production of the individual product by calculating a navigation trajectory of a vessel associated with the list of owned products to be verified, based on the monitoring information,
extracting a catchable product corresponding to positional information included in the calculated navigation trajectory from the catchables table, and
comparing the extracted catchable product with each of the products included in the list of owned products to be verified.

10. The trading method as claimed in claim 9, wherein upon verifying the place of production of a product included in a list of owned products associated with one vessel from among the two or more vessels that have been determined to have carried out an offshore trade in the step of determining a likelihood that an offshore trade has been carried out, to verify the place of production of the individual product,
further calculating a navigation trajectory of another vessel from among the two or more vessels that has been determined to have carried out the offshore trade, based on the monitoring information received from the monitoring device,
extracting a catchable product corresponding to positional information included in the calculated navigation trajectory of said another vessel from the catchables table, and
comparing the extracted catchable product with each of the products included in the list of owned products to be verified.

11. The trading method as claimed in claim 9 or 10, further comprising:
a step of generating order information representing a product ordered by a user; and
a step of providing a user terminal with a product information item from among the product information that has been verified, and matches the order information.
